# EUROPÄISCHE PATENTSCHRIFT

(11) **EP 1 718 493 B1**
(45) Veröffentlichungstag und Bekanntmachung des Hinweises auf die Patenterteilung: **18.07.2007**
(21) Anmeldenummer: 05707600.2
(22) Anmeldetag: 24.02.2005
(51) Int. Cl.: B60N 2/24, B64D 25/04, B63B 27/18, B60N 2/30

(54) **LAND-, LUFT- ODER SEEFAHRZEUG MIT EINEM TRANSPORTRAUM ZUR AUFNAHME VON GÜTERN UND/ODER VON DER PERSONENBEFÖRDERUNG DIENENDEN, FAHRZEUG GEHALTERTEN SITZEN**
LAND, AIR OR SEA VEHICLE COMPRISING A TRANSPORT COMPARTMENT FOR RECEIVING CARGO AND/OR SEATS THAT ARE MOUNTED IN THE VEHICLE FOR CONVEYING PERSONNEL
VEHICULE TERRESTRE, AERIEN OU MARITIME AVEC UNE CHAMBRE SERVANT A TRANSPORTER DES MARCHANDISES ET/OU A RECEVOIR DES SIEGES FIXES AU VEHICULE AFIN DE TRANSPORTER DES PASSAGERS

(30) Priorität: 25.02.2004 DE 102004009557; 20.12.2004 DE 102004062350
(43) Veröffentlichungstag der Anmeldung: 08.11.2006
(73) Patentinhaber: AUTOFLUG GMBH, D-25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2005/001911
(87) Internationale Veröffentlichungsnummer: WO 2005/080126

(56) Entgegenhaltungen:
- DE-A1- 4 303 719
- US-A- 2 829 702
- US-A- 3 314 720
- US-A- 3 868 143
- US-A- 4 474 347

## Beschreibung

Die Erfindung betrifft ein Land-, Luft- oder Seefahrzeug mit einem Transportraum zur Aufnahme von Gütern und/oder von der Personenbeförderung dienenden, am Fahrzeug gehalterten Sitzen, wobei zumindest eine Reihe von in der Längsachse des Fahrzeuges nebeneinander angeordneten und quer zur Bewegungsrichtung des Fahrzeuges ausgerichteten Sitzen in einer Mittelreihe des Transportraumes vorgesehen ist.

Ein Fahrzeug, insbesondere ein Flugzeug, mit den vorgenannten Merkmalen ist durch Benutzung bekannt. Soweit insbesondere militärisch eingesetzte Flugzeuge neben der Beförderung von Gütern auch zur Beförderung von Personen eingesetzt werden und demnach zumindest zeitweise als Truppentransporter dienen, sind in dem jeweiligen Transportraum des Fahrzeuges der Personenförderung dienende Sitze einzubauen, die in der Regel in der Längsachse des Fahrzeuges nebeneinander, jedoch quer zur Bewegungsrichtung des Fahrzeuges angeordnet sind. Während eine Sitzanordnung längs der äußeren Seitenwände des Fahrzeuges leichter zu realisieren ist, ergeben sich besondere Probleme bei der Anordnung von Sitzen in der sogenannten Mittelreihe, weil hier die Sitze ohne die Möglichkeit einer Anbindung an die Seitenwände frei verankert sein müssen. Hierzu ist es durch Benutzung bekannt, in der Mittelreihe Rohrgestelle am Boden des Fahrzeuges zu verankern, an denen dann eine Sitzstruktur angebracht ist.

Mit einer derartigen Ausrüstung eines Fahrzeuges ist der Nachteil verbunden, dass die Rohrgestelle einschließlich der zugeordneten Verankerungen für die Sitze sehr stabil ausgeführt sein müssen, da in der Längsachse des Fahrzeuges bei Beschleunigungen und Verzögerungen, insbesondere auch bei einer in Betracht zu ziehenden Crash-Situation, entsprechend hohe Kräfte auftreten können. Es kommt hinzu, dass die Sitze schnell montierbar und auch demontierbar sein sollen, um einen Wechsel der Einsatzart des Fahrzeuges zur Beförderung von Personen oder zum Gütertransport zu ermöglichen.

Aus der DE 43 03 719 oder der US 3 868 143 ist es bekannt, einen Sitz für die Personenbeförderung im Inneren des Transportraumes eines Fahrzeuges mittels oberhalb und unterhalb des Sitzes angeordneter, einzelner Spanngurte in dem Fahrzeug festzulegen.

Der Erfindung liegt die Aufgabe zugrunde, ein Fahrzeug der eingangs genannten Art derart weiterzubilden, dass in einer einfachen und schnell zu realisierenden wie auch sicheren Befestigung in dem Fahrzeug Sitze für die Personenbeförderung unterbringbar sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zwischen den gegenüberliegenden, in Bewegungsrichtung des Fahrzeuges verlaufenden Seitenwänden und den Dach- und Bodenflächen des Transportraumes im Raster der einzubauenden Sitze aus textilen Gurten zusammengesetzte Netzwerke aufgespannt sind und jeder Sitz einzeln an einem zugeordneten, unter Vorspannung an tragenden Teilen des Fahrzeuges befestigten Netzwerk festgelegt ist, wobei jedes Netzwerk durch zwei im Abstand der Sitzbreite angeordnete, zwischen den Seitenwänden in Dachnähe aufgespannten Quergurten und aus zwei im Abstand der Sitzbreite angeordneten, zwischen Dachfläche und Bodenfläche aufgespannten Hochgurten besteht und Quergurte und Hochgurte in ihren Kreuzungspunkten miteinander verbunden sind. Mit der Erfindung ist der Vorteil verbunden, dass das aus textilen Gurten bestehende Netzwerk einerseits aufgrund der im Fahrzeug gespannten Anordnung die erforderliche Stabilität für die Halterung der Sitze vermittelt, andererseits aber ist das Netzwerk leicht zu demontieren, so dass der volle Querschnitt des Transportraumes für die Beförderung von Gütern zur Verfügung steht. Dabei sind die den jeweils anzuordnenden Sitzen zugeordneten Netzwerke so wenig platzaufwendig, dass sie auch an Bord des Fahrzeuges mitgeführt werden können, ohne dessen Kapazität für die Güterbeförderung nennenswert zu mindern. Aufgrund dessen ist ein entsprechend großer Freiraum hinsichtlich der Nutzungsentscheidung für das Fahrzeug gegeben.

Nach einem Ausführungsbeispiel der Erfindung ist vorgesehen, dass bei einer doppelreihigen Rücken-an-Rücken-Anordnung von zwei Sitzen das Netzwerk zur Aufnahme der beiden Sitze eine doppelte Anordnung von Hochgurten umfasst derart, dass jedem der beiden Sitze jeweils eigene, an die einheitlichen Quergurte angeschlossene Hochgurte zugeordnet sind. Auf diese Weise wird jedem einzelnen Sitz in der Hochachse eine eigene Anbindung vermittelt.

Zur Ausbildung der erforderlichen Vorspannung in dem Netzwerk ist nach Ausführungsbeispielen der Erfindung vorgesehen, dass entweder in jedem der Quergurte und der Hochgurte eine Gurtspannvorrichtung eingeschaltet ist, oder dass in dem aus Quergurten und Hochgurten bestehenden Netzwerk eine zentrale Gurtspannvorrichtung angeordnet ist.

Soweit aus Stabilitätsgründen Hochgurte und Quergurte in ihren Kreuzungspunkten miteinander verbunden sein müssen, kann vorgesehen sein, dass die Hochgurte und Quergurte in ihren Kreuzungspunkten miteinander vernäht sind, so dass sich ein einheitliches Netzwerk ergibt, welches mit seinen freien Enden jeweils fahrzeugfest zu verankern ist. Alternativ kann aber auch vorgesehen sein, dass zur Verbindung von Hochgurten und Quergurten in ihren Kreuzungspunkten in einen der beiden Gurte Ösen eingeschaltet, vorzugsweise eingenäht sind, an die die jeweils anderen Gurte mittels lösbarer Verbindungsmittel, beispielsweise mittels Karabinerhaken, Schäkeln oder dergleichen angeschlossen sind.

Zur Verbesserung der Stabilität des Netzwerkes ist nach einem Ausführungsbeispiel der Erfindung vorgesehen, dass zwischen zwei im Sitzbreitenabstand aufgespannten Hochgurten ein mit den Hochgurten verspanntes Stützgerüst aus textilen Stützgurten angeordnet ist, wobei nach einem Ausführungsbeispiel der Erfindung das Stützgerüst aus zwei in der Ebene der Hochgurte aufgespannten, kreuzweise angeordneten und zwei geradlinig zwischen den Hochgurten verlaufenden Stützgurten besteht, und die Stützgurte mit ihren Enden jeweils an die Hochgurte angeschlossen sind. Soweit auch das Stützgerüst unter Spannung zu setzen ist, kann gemäß einem Ausführungsbeispiel der Erfindung in das aus den Stützgurten gebildete Stützgerüst eine Gurtspannvorrichtung eingeschaltet sein.

Soweit ebenfalls aus Gründen der Stabilität vorzugsweise jedem einzelnen Sitz bzw. zwei Rücken-an-Rücken angeordneten Sitzen ein einzelnes, aus Quergurten und Hochgurten bestehendes Netzwerk zugeordnet ist, schließt es die Erfindung aber auch nicht aus, dass bei zwei in der Längsachse des Fahrzeuges nebeneinander liegenden Netzwerken die benachbarten Netzwerke jeweils an einen gemeinsamen Quergurt und/oder Hochgurt angeschlossen sind.

Soweit mit der Ausbildung des Netzwerks im Inneren des Transportraumes die Möglichkeit zur Anbindung von entsprechend geeigneten Sitzen gegeben ist, ist erfindungsgemäß vorgesehen, dass die zu dem Sitz gehörigen Spanngurte teils an dem Netzwerk und teils an fahrzeugfest eingerichteten Verankerungspunkten verankerbar sind. Die fahrzeugfeste Verankerung der Spanngurte gilt dabei insbesondere für die zwischen dem Sitz und der Bodenfläche verlaufenden Spanngurte, während die in Richtung der Dachfläche des Transportraumes verlaufenden Spanngurte an den in Dachnähe aufgespannten Quergurten des Netzwerkes einhängbar sind. Es versteht sich, dass im Rahmen derartiger, vorzugsweise als Textilsitze ausgebildeter Sitze eine in Kopfhöhe des Fahrzeuginsassen aufgespannte seitliche Sitzbegrenzung vorgesehen sein kann, um in an sich bekannter Weise die in der Längsachse des Fahrzeuges und damit quer zum in dem Sitz sitzenden Insassen einwirkende Beschleunigungen/Verzögerungen abzufangen.

Soweit nach weiteren Ausführungsbeispielen der Erfindung vorgesehen ist, an den Hochgurten des Netzwerks einen Sitz mit einem Sicherheitsgurt zur Sicherung eines auf dem Sitz sitzenden Insassen festzulegen, ist vorgesehen, dass zur Halterung der als druckfestes Bauteil ausgeführten Sitzschale an den vertikalen Hochgurten jeweils die Sitzschale seitlich einfassende Tragegurte befestigt sind, die bei in Sitzposition befindlicher Sitzschale von einer unteren Befestigungsstelle mit den Hochgurten mit einem Abschnitt längs der Seitenränder der Sitzschale bis zu deren vorderen Eckpunkten verlaufen und von hier aus in einem zur Hochachse schrägen Verlauf zu den vertikalen Hochgurten zurückgeführt und an diesen an einer oberen Befestigungsstelle befestigt sind, und dass die Sitzschale in dem sie haltenden, aus den vertikalen Hochgurten und den seitlichen Tragegurten bestehenden Gurtgerüst zwischen ihrer Sitzposition und einer Stauposition durch Anheben des den vertikalen Hochgurten zugeordneten hinteren Endes der Sitzschale klappbar ist.

Hiermit ist zunächst der Vorteil verbunden, dass die Sitzschale von dem sie einfassenden, aus den vertikalen Hochgurten und den daran befestigten seitlichen Tragegurten bestehenden Gurtgerüst gehalten ist, ohne dass dazu andere feste Einbauten im Fahrzeug erforderlich sind; vielmehr spannt die zu diesem Zweck als druckfestes Bauteil ausgebildete Sitzschale das Gurtgerüst entsprechend auf. Somit ist der Bewegungsfreiraum für die Insassen im Fahrzeug bereits verbessert. Eine weitere vorteilhafte Verbesserung ergibt sich aus der klappbaren Anordnung der Sitzschale innerhalb des Gurtgerüsts, indem diese Sitzschale bei Nichtbenutzung an die im Bereich der Rückenabstützung angeordneten vertikalen Hochgurte heran schwenkbar und dadurch in die Stauposition bringbar ist. Diese Klappbarkeit der Sitzschale verbessert weiterhin deutlich den Komfort beim Ein- und Aussteigen aus dem Sicherheitssitz. So wird beim Aussteigen aus dem Sicherheitssitz die Sitzschale an ihrer rückwärtigen Sitzkante hochgezogen, wodurch die Vorderkante der Sitzschale nach unten klappt und damit das angesprochene Gurtgerüst zur Halterung der Sitzschale entspannt. Das Einsteigen in den Sicherheitssitz geschieht durch gleichzeitiges Hinhocken und Herunterdrücken des hinteren Endes der Sitzschale, wobei die Verspannung der Sitzschale innerhalb des sie tragenden Gurtgerüsts durch das Körpergewicht des darauf sitzenden Insassen erfolgt.

Ein als den Körper eines Insassen im Rücken wie auch seitlich umschließende textile Hülle ausgebildeter Sicherheitssitz ist aus der DE 43 03 719 A1 bekannt.

Nach einem Ausführungsbeispiel der Erfindung ist vorgesehen, dass sich die Sitzschale mit ihrem rückwärtigen Ende zwischen die vertikalen Hochgurte erstreckt und zwischen diesen bei ihrer Klappbewegung geführt ist. Damit spannt die druckfeste Sitzschale gleichzeitig auch die vertikalen Hochgurte entsprechend vor.

Zur Verbringung der Sitzschale von dem Sitzposition in die Stauposition und als Hilfestellung beim Aussteigen aus dem Sicherheitssitz ist nach einem Ausführungsbeispiel der Erfindung vorgesehen, dass an dem hinteren Ende der Sitzschale ein Betätigungsseil angeschlossen und über eine im Deckenbereich des Fahrzeuges befindliche Umlenkung geführt ist und eine am Deckenbereich des Fahrzeuges gehalterte Griffschlaufe aufweist. Steht der Insasse aus dem Sicherheitssitz auf, so wird durch das gleichzeitige Entlasten des Körpergewichts von der Sitzschale und das Ziehen an der Griffschlaufe des Betätigungsseils die Sitzschale in die Stauposition verbracht, so dass ein seitliches Aussteigen beziehungsweise späteres Einsteigen nicht mehr gehindert ist.

Nach Ausführungsbeispielen der Erfindung kann die Sitzschale aus einer festen Platte oder auch aus einem Rohrrahmen mit einer davon getragenen textilen Sitzfläche bestehen. Alternative Ausführungsformen einer Kombination eines druckfesten Rahmens mit textilen Sitzflächen sind möglich.

Nach einem Ausführungsbeispiel der Erfindung ist vorgesehen, dass die seitlichen Tragegurte an der Sitzschale an deren vorderen Eckpunkten fixiert sind, so dass die Sitzschale gegenüber dem sie tragenden, aus den seitlichen Tragegurten und den vertikalen Hochgurten bestehenden Gurtgerüst befestigt und dadurch in ihrer Klappbewegung geführt ist.

Nach Ausführungsbeispielen der Erfindung können die seitlichen Tragegurte als einstückige Gurtbänder ausgeführt sein oder auch aus zwei einzelnen, jeweils mit den vertikalen Hochgurten und der Sitzschale verbundenen Gurtabschnitten bestehen.

Soweit derartige Sicherheitssitze zusätzlich auch mit einem Aufprallschutz für den Kopf des Insassen zu versehen sind, ist nach einem Ausführungsbeispiel vorgesehen, dass als Kopf-Aufprallschutz in der Ebene der Rückenabstützung zwischen den vertikalen Hochgurten eine textile Kopfstütze aufgespannt ist, die sich in oberhalb der seitlichen Tragegurte befindliche seitliche Stützflächen fortsetzt, welche an ihrem vorderen freien Ende an einem von einem oberen Befestigungspunkt am Deckenbereich des Fahrzeuges zum unteren Befestigungspunkt des vertikalen Hochgurtes am Boden des Fahrzeuges schräg zur Hochachse des Fahrzeuges verlaufenden Spanngurt angeschlossen sind. Aufgrund ihres besonderen, schrägen Verlaufs innerhalb des Fahrzeuges schränken dabei die zusätzlichen Spanngurte die Bewegungsfreiheit des Insassen beim Ein- und Aussteigen nur wenig ein und bieten gleichzeitig auch eine ausreichende Ellenbogenfreiheit für den im Sicherheitssitz sitzenden Insassen.

Es kann vorgesehen sein, dass die Kopfstütze aus einem teiltransparenten textilen Material ausgebildet ist.

In einer weiteren Verbesserung kann vorgesehen sein, dass der Spanngurt mit einer betätigbaren, lösbaren Spannvorrichtung versehen ist; hiermit ist die Möglichkeit gegeben, den Spanngurt beim Ein- bzw. Aussteigen zu lockern und damit die seitlichen Stützflächen zusätzlich aus dem Ein- bzw. Ausstiegsbereich des Sitzes zu entfernen.

Soweit nach einem Ausführungsbeispiel der Erfindung vorgesehen ist, dass zwischen dem zwischen den vertikalen Hochgurten aufgespannten Bereich der Kopfstütze und der Rückenabstützung eine zusätzliche textile Aufprallmatte an den vertikalen Hochgurten befestigt ist, ist hiermit der Vorteil verbunden, dass bei in Reihenanordnung von in einem Fahrzeug angeordneten Sicherheitssitzen die hinter einem Sicherheitssitz sitzenden Personen gegen einen Frontalaufprall geschützt sind, indem der durch die Vorwärtsbeschleunigung eine Tauchbewegung ausführende Kopf des hinteren Insassen durch die Aufprallmatte an dem Vordersitz aufgefangen wird.

Hinsichtlich der Ausbildung der Aufprallmatte kann vorgesehen sein, dass die Aufprallmatte mit den zwischen den vertikalen Hochgurten befindlichen Teil der textilen Kopfstütze einstückig ausgebildet ist.

Die Rückenabstützung kann als zwischen den vertikalen Hochgurten aufgespannter Gurt oder als entsprechend angeordnetes textiles Gewebe oder als versteifte Platte ausgebildet sein.

In der Zeichnung sind Ausführungsbeispiele der Erfindung wiedergegeben, welche nachstehend beschrieben sind. Es zeigen:
- Fig. 1: den Transportraum eines Fahrzeuges mit einem darin aufgespannten Netzwerk in einer schematischen Darstellung,
- Fig. 2: den Gegenstand der Figur 1 mit einem zusätzlichen Stützgerüst für die Hochgurte des Netzwerkes,
- Fig. 3: den Gegenstand der Figur 2 mit einem an dem Netzwerk gehalterten Sitz,
- Fig. 4: den Gegenstand der Figur 3 mit einer in dem Sitz sitzenden Person.
- Fig. 5: einen in einem Fahrzeug angeordneten Sicherheitssitz mit einem darauf sitzenden Insassen in schematischer Darstellung in Seitenansicht,
- Fig. 6: den Sicherheitssitz gemäß Figur 5 ohne Insassen in einer Ansicht,
- Fig. 7: den Sicherheitssitz entsprechend Figur 5 bzw. 6 in der unbenutzten Stauposition seiner Sitzschale,
- Fig. 8: die Ausbildung einer Kopf-Abstützung in einer schematischen Darstellung.

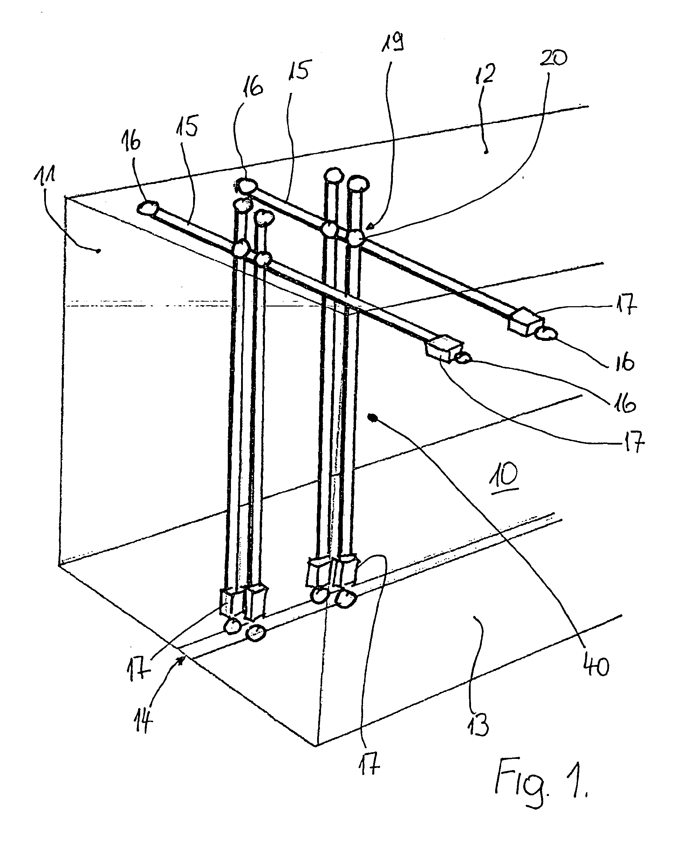

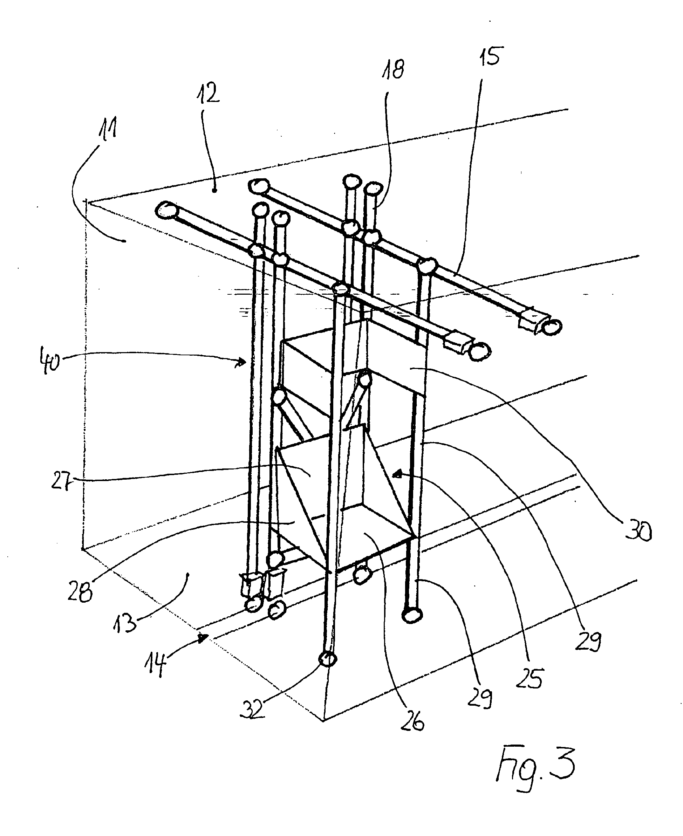

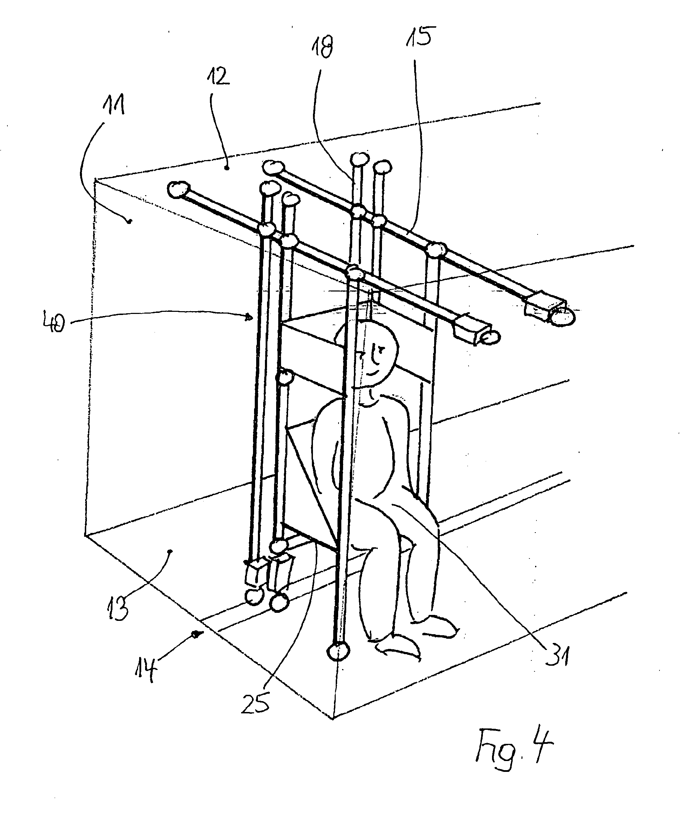

Ein schematisch dargestellter Transportraum 10 eines Land-, Luft- oder Seefahrzeuges, insbesondere aber eines Flugzeuges, ist von in Bewegungsrichtung des Fahrzeuges verlaufenden Seitenwänden 11, einer Dachfläche 12 und einer Bodenfläche 13 umschlossen. Im Einzelnen befasst sich die Erfindung dabei mit der Anordnung von Sitzen (Figuren 3 und 4) in der Mittelreihe 14 des Transportraumes 10, und insofern richtet sich das aus Figur 1 ersichtliche Netzwerk 40 auf die Mittelreihe 14.

Dieses Netzwerk 40 besteht zunächst aus zwei zwischen den sich gegenüberliegenden Seitenwänden 11 in Nähe der Dachfläche 12, jedoch mit Abstand dazu, aufgespannten Quergurten 15, die im Abstand einer Sitzbreite angeordnet und mit ihren Endverankerungen 16 an den Seitenwänden 11 kraftübertragend befestigt sind. In die beiden Quergurte 15 ist bei dem dargestellten Ausführungsbeispiel jeweils eine Gurtspannvorrichtung 17 eingeschaltet.

Im Bereich der Mittelreihe 14 sind in der Hochachse des Transportraumes 10 verlaufende Hochgurte 18 angeordnet, und zwar wiederum jeweils zwei Hochgurte im Abstand einer Sitzbreite. Soweit, wie im einzelnen nicht dargestellt, an dem Netzwerk 40 zwei einzelne Sitze in einer Rücken-an-Rücken-Anordnung gehaltert werden sollen, umfasst das Netzwerk 40 insgesamt vier Hochgurte 18, die mit ihren jeweiligen Endverankerungen 16 an der Dachfläche 12 bzw. der Bodenfläche 13 verankert sind. Es ist einsichtig, dass jeweils zwei in der Sitzbreite beabstandete Hochgurte 18 zur Halterung jeweils eines Sitzes herangezogen werden. Ebenso wie in die Quergurte 15 sind in die Hochgurte 18 jeweils Gurtspannvorrichtungen 17 eingeschaltet.

Soweit aus Gründen eines stabilen Netzwerkes Quergurte 15 und Hochgurte 18 an ihren Kreuzungspunkten 19 miteinander zu verbinden sind, sind bei dem dargestellten Ausführungsbeispiel in einen der beiden Gurte Ösen 20 eingearbeitet, an denen der jeweils andere Gurt, wie im einzelnen nicht weiter dargestellt, mittels einer lösbaren Verbindung, vorzugsweise mittels Schäkeln oder Karabinerhaken befestigt ist. Soweit das Netzwerk 40 als einheitliches Netzwerk ausgebildet werden soll, ist es auch möglich, alle in einer Öse 20 kreuzenden Gurtenden von Quergurten 15 und Hochgurten 18 jeweils unmittelbar mit der Öse 20 zu vernähen.

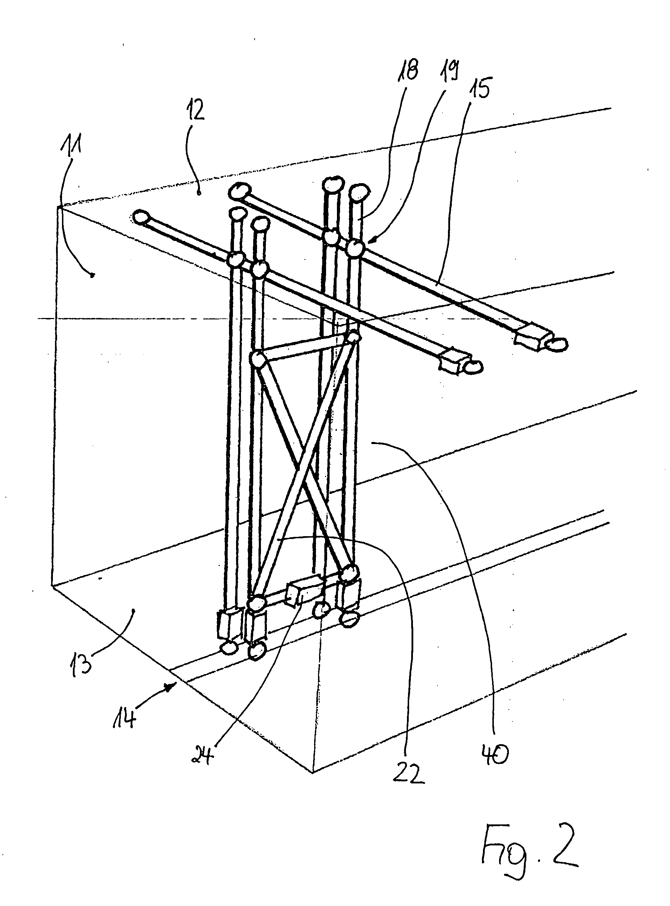

Es ist weiterhin darauf hinzuweisen, dass es sich bei der Darstellung der Figur 1 wie auch der nachfolgend noch zu beschreibenden Figuren 2 bis 4 um eine idealisierte Darstellung handelt, weil bei einer ausgeübten Spannung im Netzwerk 40 insbesondere die Quergurte 15 ihren geradlinigen Verlauf nicht beibehalten, sondern sich V-förmig in Richtung der Anschlusspunkte der Hochgurte 18 neigen werden. Entsprechendes gilt auch dann, wenn gemäß Figuren 3 und 4 die noch zu beschreibenden Spanngurte für die Halterung der Sitze am Netzwerk an den Quergurten angeschlagen werden, die ebenfalls aufgrund der ausgeübten Vorspannung den als geradlinig dargestellten Verlauf der Quergurte 15 abändern.

Wie sich aus Figur 2 ergibt, ist das Netzwerk 40 zur Verbesserung einer Stabilität insbesondere im Hochachsen-Bereich mit einem zwischen zwei Hochgurten 18 aufgespannten Stützgerüst 21 versehen, welches aus einer Anordnung von zwei kreuzweise verlaufenden Stützgurten 22 und zwei geradlinig zwischen den Hochgurten 18 angeordneten Stützgurten 23 besteht. Das Stützgerüst 21 ist jeweils mit den Hochgurten 18 verbunden, wobei die Verbindung in gleicher Weise ausgestaltet sein kann, wie zu den Kreuzungspunkten 19 von Quergurten 15 und Hochgurten 18 erläutert. In den unteren Stützgurt 23 ist bei dem Stützgerüst 21 eine zusätzliche Gurtspannvorrichtung 24 eingeschaltet. Aus Gründen der Übersichtlichkeit ist in Figur 2 nicht dargestellt, dass zwischen den beiden weiteren, zur Halterung des zweiten Sitzes vorgesehenen Hochgurten 18 ebenfalls ein Stützgerüst 21 gleicher Ausbildung angeordnet ist, so dass sich insgesamt eine symmetrische Ausbildung des Netzwerkes 40 einschließlich Stützgerüsten 21 ergibt.

An dem so vorbereiteten Netzwerk wird nun ein in Figur 3 schematisch dargestellter Sitz 25 angeschlossen, der eine Sitzfläche 26, ein Rückenteil 27 und Seitenteile 28 aufweist. Von den Eckpunkten des schematisch dargestellten Sitzes 25 führen jeweils Spanngurte in Richtung der Dachfläche 12 wie auch in Richtung der Bodenfläche 13, wobei in der Darstellung der Figur 3 nur die jeweils am vorderen Ende des Sitzes 25 angreifenden Spanngurte 29 erkennbar sind. Die freien Enden dieser Spanngurte 29 sind einerseits an zusätzlichen Verankerungen 32 auf der Bodenfläche 13 und andererseits an den Quergurten 15 des Netzwerks 40 angeschlagen, während die rückseitigen, nicht dargestellten Spanngurte mit den Hochgurten 18 verbunden sind. Insoweit ist der Sitz 25 an dem aufgespannten Netzwerk 40 festgelegt.

Um bei den schon angesprochenen, in Richtung der Mittelreihe 14 wirkenden Beschleunigungen bzw. Verzögerungen den Kopf des Fahrzeuginsassen abzustützen, sind zwischen den jeweiligen Spanngurten des Sitzes 25 in Kopfhöhe Kopfnetze 30 aufgespannt, die wiederum nur schematisch angedeutet sind.

Aus Figur 4 ergibt sich schließlich die Sitzposition eines in dem Sitz 25 sitzenden Fahrzeuginsassen.

Wie vorstehend beschrieben ist ein entsprechender Sitz 25 in einer Rücken-an-Rücken-Anordnung an den in der Darstellung 2 bis 4 nicht weiter erfassten Hochgurten 18 verankert.

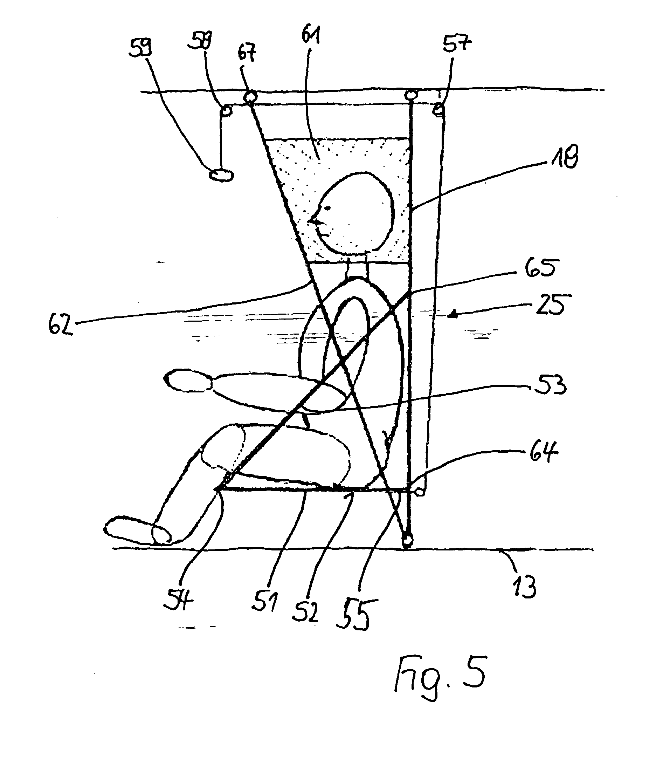

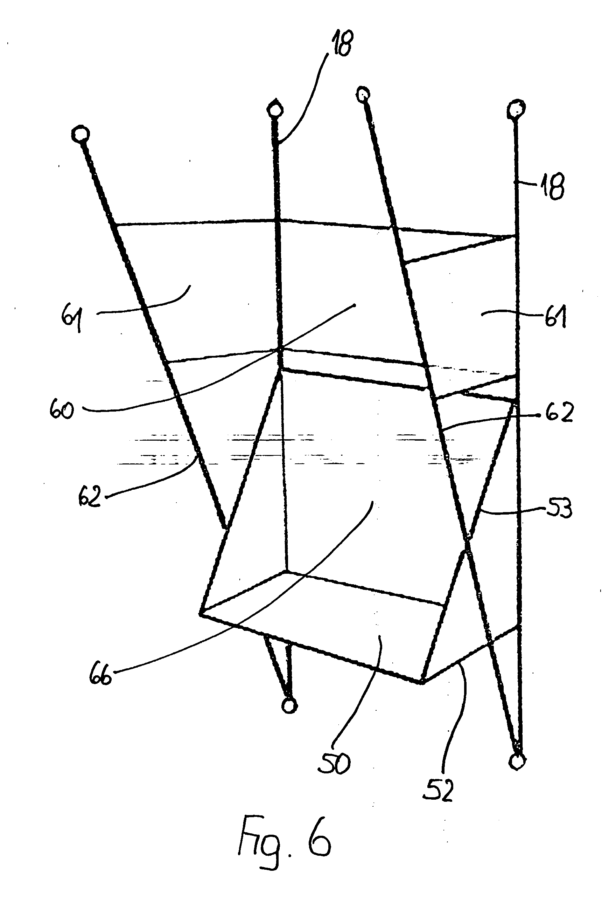

Wie sich aus Figuren 5 und 6 ergibt, ist der Sicherheitssitz 25 an vertikal zwischen der Fahrzeugdecke 12 und dem Fahrzeugboden 13 aufgespannten vertikalen Hochgurten 18 festgelegt. Der Sicherheitssitz 25 hat dabei insbesondere eine als druckfestes Bauteil ausgeführte Sitzschale 50, die an den vertikalen Hochgurten 18 mittels zusätzlich angeordneter, mit den vertikalen Hochgurten 18 verbundener und mit diesen ein Gurtgerüst zur Halterung der Sitzschale 50 bildender seitlicher Tragegurte 51 festgelegt ist. Dabei bestehen die seitlichen Tragegurte 51 aus einem von einer unteren Befestigungsstelle 64 längs der Seitenränder der Sitzschale 50 bis zu deren vorderen Eckpunkten 54 verlaufenden Abschnitten 52, wobei von den vorderen Eckpunkten 54 der Sitzschale 50 jeweils ein weiterer schräg zur Hochachse des Fahrzeuges verlaufender Abschnitt 53 zu einer oberen Befestigungsstelle 65 an dem zugeordneten vertikalen Hochgurt 18 zurückgeführt ist. Die als druckfestes Bauteil ausgebildete Sitzschale 50 ist dabei so in das aus Hochgurten 18 und Tragegurten 51 gebildete Gurtgerüst eingesetzt, dass die Sitzschale 50 das Gurtgerüst selbsttätig aufspannt.

An dem rückwärtigen Ende 55 der Sitzschale 50 greift ein Betätigungsseil 56 an, welches zu einer an der Fahrzeugdecke 12 befestigten Umlenkung 57 führt, hier umgelenkt und über eine weitere Umlenkung 58 in die Position vor dem in dem Sicherheitssitz 25 sitzenden Insassen geführt ist und in einer Griffschlaufe 59 endet.

Weiterhin ist der Sicherheitssitz 25 mit einem Aufprallschutz für den Kopf versehen, der aus einer oberhalb einer Rückenlehne beziehungsweise Rückenabstützung 66 zwischen den vertikalen Hochgurten 18 aufgespannten textilen Kopfstütze 60 besteht. Die Kopfstütze 60 ist in seitliche Stützflächen 61 umgelenkt, die oberhalb der seitlichen Tragegurte 51 angeordnet sind und an ihrem vorderen Ende an einem Spanngurt 62 angeschlagen sind. Die zugeordneten Spanngurte 62 verlaufen von einer oberhalb des vorderen Bereichs der Sitzschale 50 angeordneten Befestigung 67 an der Fahrzeugdecke 12 in einem zur Hochachse des Fahrzeuges schrägen Verlauf zu der Befestigung der vertikalen Hochgurte 18 an dem Fahrzeugboden 13.

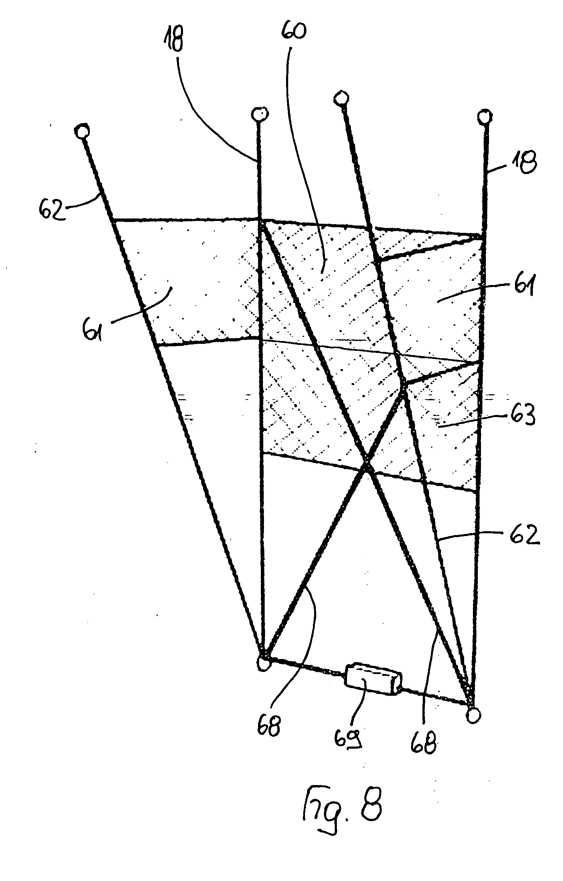

Zur zusätzlichen Absicherung kann, wie aus Figur 8 ersichtlich, unterhalb der textilen Kopfstütze 60 noch eine textile Aufprallmatte 63 zwischen den vertikalen Hochgurten 18 aufgespannt sein um den Kopf eines hinter diesem Sicherheitssitz sitzenden Insassen bei entsprechend auftretenden negativen Fahrzeugbeschleunigungen abzufangen.

Bei dem in Figur 8 dargestellten Ausführungsbeispiel sind zur Verstärkung des Gurtgerüsts noch zwischen den vertikalen Hochgurten 18 Diagonalgurte 68 aufgespannt, die über eine zugeordnete Spannvorrichtung 69 spannbar sind.

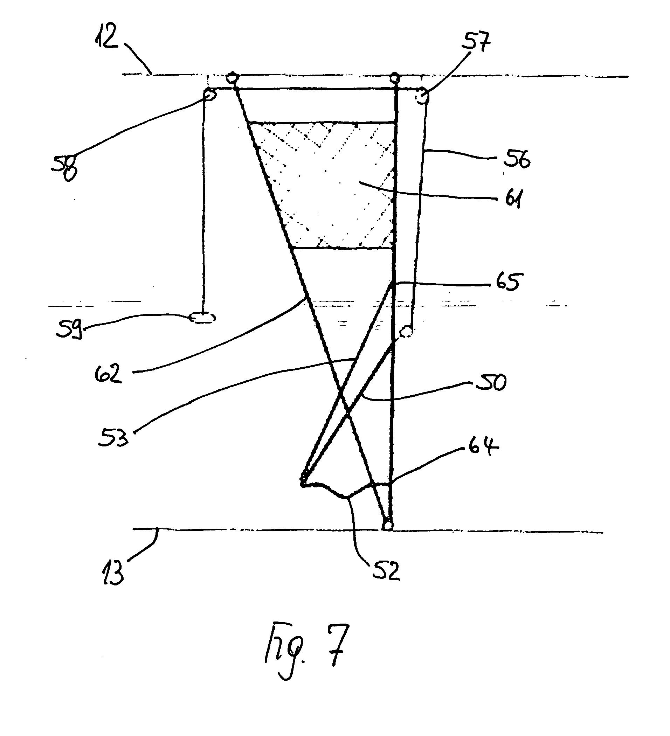

Insbesondere aus Figur 7 in Verbindung mit Figur 5 ergibt sich die vorteilhafte Handhabung des Sicherheitssitzes. Beim Aufstehen aus dem Sicherheitssitz ergreift der Insasse die vor ihm hängende Griffschlaufe 59 und zieht diese nach unten; gleichzeitig erhebt sich der Insasse von der Sitzschale 50 und entlastet diese damit. Beide Bewegungsvorgänge führen dazu, dass die Sitzschale 50 in die in Figur 7 dargestellte Stauposition geklappt wird, indem das rückwärtige Ende der Sitzschale 50 zwischen den vertikalen Hochgurten 18 hoch gleitet und sich die Vorderkante der Sitzschale 50 entsprechend absenkt. Damit wird die Aufstehbewegung des Insassen unterstützt, und der Insasse wird sozusagen aus dem Sicherheitssitz gekippt.

Soll die Position auf dem Sicherheitssitz sitzend eingenommen werden, so zieht der Insasse an der Vorderseite der Sitzschale diese etwas aus ihrer Stauposition heraus und setzt sich anschließend darauf; hierdurch spannt die Sitzschale unter dem Gewicht des Insassen das aus Hochgurten 18 und seitlichen Tragegurten 51 bestehende Gurtgerüst selbsttätig auf.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Land-, Luft- oder Seefahrzeug mit einem Transportraum zur Aufnahme von Gütern und/oder von der Personenbeförderung dienenden, am Fahrzeug gehalterten Sitzen, wobei zumindest eine Reihe von in der Längsachse des Fahrzeuges nebeneinander angeordneten und quer zur Bewegungsrichtung des Fahrzeuges ausgerichteten Sitzen in einer Mittelreihe des Transportraumes vorgesehen ist, **dadurch gekennzeichnet, dass** zwischen den gegenüberliegenden, in Bewegungsrichtung des Fahrzeuges verlaufenden Seitenwänden (11) und den Dach- und Bodenflächen (12, 13) des Transportraumes (10) im Raster der einzubauenden Sitze (25) aus textilen Gurten zusammengesetzte Netzwerke (40) aufgespannt sind und jeder Sitz (25) einzeln an einem zugeordneten, unter Vorspannung an tragenden Teilen des Fahrzeuges befestigten Netzwerk (40) festgelegt ist, wobei jedes Netzwerk (40) durch zwei im Abstand der Sitzbreite angeordnete, zwischen den Seitenwänden (11) in Dachnähe aufgespannten Quergurten (15) und aus zwei im Abstand der Sitzbreite angeordneten, zwischen Dachfläche (12) und Bodenfläche (13) aufgespannten Hochgurten (18) besteht und Quergurte (15) und Hochgurte (18) in ihren Kreuzungspunkten (19) miteinander verbunden sind.

2. Land-, Luft- oder Seefahrzeug nach Anspruch 1, **dadurch gekennzeichnet, dass** bei einer doppelreihigen Rücken-an-Rücken-Anordnung von zwei Sitzen (25) das Netzwerk (40) zur Aufnahme der beiden Sitze (25) eine doppelte Anordnung von Hochgurten (18) umfasst derart, dass jedem der beiden Sitze (25) jeweils eigene, an die einheitlichen Quergurte (15) angeschlossene Hochgurte (18) zugeordnet sind.

3. Land-, Luft- oder Seefahrzeug nach Anspruch 1 oder 2, **dadurch gekennzeichnet, dass** in jedem der Quergurte (15) und der Hochgurte (18) eine Gurtspannvorrichtung (17) eingeschaltet ist.

4. Land-, Luft- oder Seefahrzeug nach Anspruch 1 oder 2, **dadurch gekennzeichnet, dass** in dem aus Quergurten (15) und Hochgurten (18) gebildeten Netzwerk (40) eine zentrale Gurtspannvorrichtung (17) angeordnet ist.

5. Land-, Luft- oder Seefahrzeug nach einem der Ansprüche 1 bis 4, **dadurch gekennzeichnet, dass** Hochgurte (18) und Quergurte (15) an ihren Kreuzungspunkten (19) miteinander vernäht sind.

6. Land-, Luft- oder Seefahrzeug nach einem der Ansprüche 1 bis 4, **dadurch gekennzeichnet, dass** zur Verbindung von Hochgurten (18) und Quergurten (15) in ihren Kreuzungspunkten (19) in einen der Gurte (15, 18) Ösen (20) eingeschaltet sind, an die die jeweils anderen Gurte (15, 18) mittels lösbarer Verbindungsmittel angeschlossen sind.

7. Land-, Luft- oder Seefahrzeug mit einem Transportraum zur Aufnahme von Gütern und/oder von der Personenbeförderung dienenden, Fahrzeug gehalterten Sitzen nach einem der Ansprüche 1 bis 6, **dadurch gekennzeichnet, dass** zwischen zwei im Sitzbreitenabstand aufgespannten Hochgurten (18) ein mit den Hochgurten (18) verspanntes Stützgerüst (21) aus textilen Gurten (22, 23) angeordnet ist.

8. Land-, Luft- oder Seefahrzeug nach Anspruch 7, **dadurch gekennzeichnet, dass** das Stützgerüst (21) aus zwei in der Ebene der Hochgurte (18) aufgespannten, kreuzweise angeordneten (22) und zwei geradlinig (23) zwischen den Hochgurten (18) verlaufenden Stützgurten besteht, wobei die Stützgurte (22, 23) mit ihren Enden jeweils an die Hochgurte (18) angeschlossen sind.

9. Land-, Luft oder Seefahrzeug nach Anspruch 7 oder 8, **dadurch gekennzeichnet, dass** in das aus den Stützgurten (22, 23) gebildete Stützgerüst (21) eine Gurtspannvorrichtung (24) eingeschaltet ist.

10. Land-, Luft- oder Seefahrzeug nach einem der Ansprüche 1 bis 9, **dadurch gekennzeichnet, dass** bei zwei in der Längsachse des Fahrzeuges nebeneinander liegenden Netzwerken (40) die benachbarten Netzwerke (40) jeweils an einen gemeinsamen Quergurt (15) und/oder Hochgurt (18) angeschlossen sind.

11. Land-, Luft- oder Seefahrzeug nach einem der Ansprüche 1 bis 10 mit einem mittels oberhalb und unterhalb des Sitzes angeordneter Spanngurte in dem Fahrzeug festzulegenden Sitz, **dadurch gekennzeichnet, dass** die zu dem Sitz (25) gehörigen Spanngurte (29) teils an dem Netzwerk (40) und teils an fahrzeugfest eingerichteten Verankerungspunkten verankerbar sind.

12. Land-, Luft- oder Seefahrzeug nach einem der Ansprüche 1 bis 11 mit einem, an den Hochgurten (18) des Netzwerks (40) festzulegenden und ein Sicherheitsgurtzeug zur Sicherung eines auf dem Sitz sitzenden Insassen aufweisenden Sitz, **dadurch gekennzeichnet, dass** zur Halterung der als druckfestes Bauteil ausgeführten Sitzschale (50) an den vertikalen Hochgurten (18) jeweils die Sitzschale (50) seitlich einfassende Tragegurte befestigt sind, die bei in Sitzposition befindlicher Sitzschale (50) von einer unteren Befestigungsstelle (64) mit den Hochgurten (18) mit einem Abschnitt (52) längs der Seitenränder der Sitzschale (50) bis zu deren vorderen Eckpunkten (54) verlaufen und von hier aus in einem zur Hochachse schrägen Verlauf zu den vertikalen Hochgurten (18) zurückgeführt und an diesen an einer oberen Befestigungsstelle (65) befestigt sind, und dass die Sitzschale (50) in dem sie haltenden, aus den vertikalen Hochgurten (18) und den seitlichen Tragegurten (51) bestehenden Gurtgerüst zwischen ihrer Sitzposition und einer Stauposition durch Anheben des den vertikalen Hochegurten (18) zugeordneten hinteren Endes (55) der Sitzschale (50) klappbar ist.

13. Land-, Luft- oder Seefahrzeug nach Anspruch 12, **dadurch gekennzeichnet, dass** sich die Sitzschale mit ihrem rückwärtigen Ende zwischen die vertikalen Haltegurte erstreckt und zwischen diesen bei ihrer Klappbewegung geführt ist.

14. Land-, Luft- oder Seefahrzeug nach Anspruch 12 oder 13, **dadurch gekennzeichnet, dass** an dem hinteren Ende (55) der Sitzschale (50) ein Betätigungsseil (56) angeschlossen und über eine im Deckenbereich (12) des Fahrzeuges befindliche Umlenkung (57) geführt ist und eine am Deckenbereich des Fahrzeuges gehalterte Griffschlaufe (59) aufweist.

15. Land-, Luft- oder Seefahrzeug nach einem der Ansprüche 12 bis 14, **dadurch gekennzeichnet, dass** die Sitzschale (50) aus einer festen Platte besteht.

16. Land-, Luft- oder Seefahrzeug nach einem der Ansprüche 12 bis 14, **dadurch gekennzeichnet, dass** die Sitzschale (50) aus einem Rohrrahmen mit einer davon getragenen textilen Sitzfläche besteht.

17. Land-, Luft- oder Seefahrzeug nach einem der Ansprüche 12 bis 16, **dadurch gekennzeichnet, dass** die seitlichen Tragegurte (51) an der Sitzschale (50) an deren vorderen Eckpunkten (54) fixiert sind.

18. Land-, Luft- oder Seefahrzeug nach einem der Ansprüche 12 bis 17, **dadurch gekennzeichnet, dass** die seitlichen Tragegurte (51) als einstückige Gurtbänder ausgeführt sind.

19. Land-, Luft- oder Seefahrzeug nach einem der Ansprüche 12 bis 17, **dadurch gekennzeichnet, dass** die seitlichen Tragegurte (51) aus zwei einzelnen, jeweils mit den vertikalen Hochgurten (18) und der Sitzschale (50) verbundenen Gurtabschnitten bestehen.

20. Land-, Luft- oder Seefahrzeug nach einem der Ansprüche 12 bis 19, **dadurch gekennzeichnet, dass** als Kopf-Aufprallschutz in der Ebene der Rückenabstützung (66) zwischen den vertikalen Hochgurten (18) eine textile Kopfstütze (60) aufgespannt ist, die sich in oberhalb der seitlichen Tragegurte (51) befindliche seitliche Stützflächen (61) fortsetzt, welche an ihrem vorderen freien Ende an einem von einem oberen Befestigungspunkt (67) am Deckenbereich des Fahrzeuges zum unteren Befestigungspunkt des vertikalen Hochgurtes (18) am Boden (13) des Fahrzeuges schräg zur Hochachse des Fahrzeuges verlaufenden Spanngurt (62) angeschlossen sind.

21. Land-, Luft- oder Seefahrzeug nach Anspruch 20, **dadurch gekennzeichnet, dass** die Kopfstütze (60) aus einem teiltransparenten textilen Material ausgebildet ist.

22. Land-, Luft- oder Seefahrzeug nach Anspruch 20 oder 21, **dadurch gekennzeichnet, dass** der Spanngurt (62) mit einer betätigbaren, lösbaren Spannvorrichtung versehen ist.

23. Land-, Luft- oder Seefahrzeug nach einem der Ansprüche 12 bis 22, **dadurch gekennzeichnet, dass** zwischen dem zwischen den vertikalen Hochgurten (18) aufgespannten Bereich der Kopfstütze (60) und der Rückenabstützung (66) eine zusätzliche textile Aufprallmatte (63)an den vertikalen Hochgurten (18) befestigt ist.

24. Land-, Luft- oder Seefahrzeug nach Anspruch 23, **dadurch gekennzeichnet, dass** die Aufprallmatte (63) mit dem zwischen den vertikalen Hochgurten (18) befindlichen Teil der textilen Kopfstütze (60) einstückig ausgebildet ist.

## Claims

1. Land, air or sea vehicle having a transport compartment for accommodating cargo and/or seats mounted to the vehicle for conveying personnel, whereby at least one row of seats disposed next to one another in the longitudinal axis of the vehicle and oriented transverse to the direction of movement of the vehicle is provided in a central row of the transport compartment, **characterized in that** mesh frameworks (40) composed of textile straps are suspended, within the pattern of the seats (25) that are to be installed, between roof and floor surfaces (12, 13) of the transport compartment (10) and the oppositely disposed side walls (11) that extend in the direction of movement of the vehicle, and each seat (25) is individually secured to an associated mesh framework (40) which is secured, under tension, to support elements of the vehicle, wherein each mesh framework (40) is comprised of two transverse straps (15) and two vertical straps (18), wherein the transverse straps are spaced from one another by the width of the seat and are suspended between the side walls (11) in the vicinity of the roof, wherein the vertical straps are spaced from one another by the width of the seat and are suspended between the roof surface (12) and the floor surface (13), and wherein the transverse straps (15) and the vertical straps (18) are interconnected at their points of intersection (19).

2. Land, air or sea vehicle according to claim 1, **characterized in that** with a double-rowed back-to-back arrangement of two seats (25), the mesh framework (20) for accommodating the two seats (25) includes a doubled arrangement of vertical straps (18) in such a way that each of the two seats (25) has associated with it its own vertical straps (18) that are connected to the unitary transverse straps.

3. Land, air or sea vehicle according to claim 1 or 2 , **characterized in that** a strap-tensioning mechanism (17) is disposed in each of the transverse straps (15) and the vertical straps (18).

4. Land, air or sea vehicle according to claim 1 or 2, **characterized in that** a central strap-tensioning mechanism (17) is disposed in the mesh framework (40) composed of transverse straps (15) and vertical straps (18).

5. Land, air or sea vehicle according to one of the Claims 1 to 4, **characterized in that** vertical straps (18) and transverse straps (15) are sewn together at their points of intersection (19).

6. Land, air or sea vehicle according to one of the Claims 1 to 4, **characterized in that** to connect the vertical straps (18) and the transverse straps (15) at their points of intersection (19), eyelets (20) are disposed on one of the straps (15, 18) to which the respective other straps (15, 18) are connected via detachable connection means.

7. Land, air or sea vehicle having a transport compartment for accommodating cargo and/or seats mounted to the vehicle and serving for conveying personnel according to one of the Claims 1 to 6, **characterized in that** a support structure (21) of textile straps (22, 23) and held in place by the vertical straps (18) is disposed between two vertical straps (18) suspended at a seat width apart.

8. Land, air or sea vehicle according to claim 7, **characterized in that** the support structure (21) is comprised of two intersecting support straps (22), which are suspended in the plane of the vertical straps (18), and two support straps (23) that extend linearly between the vertical straps (18), whereby the ends of the support straps (22, 23) are respectively connected to the vertical straps (18).

9. Land, air or sea vehicle according to claim 7 or 8, **characterized in that** a strap-tensioning mechanism (24) is disposed in the support structure (21) formed of the support straps (22, 23).

10. Land, air or sea vehicle according to one of the claims 1 to 9, **characterized in that** with two mesh frameworks (40) disposed next to one another in the longitudinal axis of the vehicle, the adjacent mesh frameworks (40) are respectively connected to a common transverse strap (15) and/or vertical strap (18).

11. Land, air or sea vehicle according to one of the claims 1 to 10 with a seat that is to be secured in the vehicle via holding straps disposed above and below the seat, **characterized in that** the holding straps (29) belonging to the seat (25) can be anchored partially on the mesh framework (40) and partially on anchoring points attached to the vehicle.

12. Land, air or sea vehicle according to one of the claims 1 to 11 with a seat that is to be secured to the vertical straps (18) of the mesh framework (40) and having a safety harness for securing an occupant sitting on the seat, **characterized in that** for the support of a seat pan (50) embodied as a component that is resistant to pressure, support straps that respectively laterally border the seat pan (50) are secured to the vertical straps (18) and that when the seat pan (50) is in the sitting position via a portion (52) thereof extend from a lower securement location (64) with the vertical straps (18) along the side edges of the seat pan (50) to the front corners (54) thereof and from here, following a course that is inclined relative to the vertical axis, are guided back to the vertical straps (18) and are secured thereto at an upper securement location (65), and **in that** the seat pan (50), in the strap structure that holds it and that is composed of the vertical straps (18) and the lateral support straps (51), can be folded or pivoted between its sitting position and a storage position by raising the rear end (55) of the seat pan (50) associated with the vertical straps (18).

13. Land, air or sea vehicle according to claim 12, **characterized in that** the rear end of the seat pan extends between the vertical straps and is guided between them during its folding movement.

14. Land, air or sea vehicle according to claim 12 or 13, **characterized in that** a control portion (56) is disposed on the rear end (55) of the seat pan (50) and is guided over a guide member (57) located in the roof portion (12) of the vehicle and has a handle or grip loop (59) supported on the roof portion of the vehicle.

15. Land, air or sea vehicle according to one of the claims 12 to 14, **characterized in that** the seat pan (50) is comprised of a solid panel.

16. Land, air or sea vehicle according to one of the claims 12 to 14, **characterized in that** the seat pan (50) is comprised of atubular frame having a textile seating surface supported thereby.

17. Land, air or sea vehicle according to one of the claims 12 to 16, **characterized in that** the lateral support straps (51) are fixed to the seat pan (50) at the front corners (54) thereof.

18. Land, air or sea vehicle according to one of the claims 12 to 17, **characterized in that** the lateral support straps (51) are embodied as one-piece belt straps.

19. Land, air or sea vehicle according to one of the claims 12 to 17, **characterized in that** the lateral support straps (51) are comprised of two individual strap portions, each of which is connected with the vertical straps (18) and the seat pan (50).

20. Land, air or sea vehicle according to one of the claims 12 to 19, **characterized in that** a textile head support (60) is suspended as a head impact or collision protection in the plane of the back support (66) between the vertical support straps (18) and continues in lateral support surfaces (61) disposed above the lateral support straps (51), wherein the forward free end of the lateral support surface is connected to a holding strap (62) that extends from an upper securement point (67) on the roof portion of the vehicle to the lower securement point of the vertical strap (18) at the floor (13) of the vehicle at an angle to the vertical axis of the vehicle.

21. Land, air or sea vehicle according to claim 20, **characterized in that** the head support (60) is made of a partially transparent textile material.

22. Land, air or sea vehicle according to Claim 20 or 21, **characterized in that** the holding strap (62) is provided with an actuatable, detachable tensioning device.

23. Land, air or sea vehicle according to one of the Claims 12 to 22, **characterized in that** an additional textile collision matting (63) is secured to the vertical Straps (18) between the back support (66) and the region of the head support (60) suspended between the vertical straps (18).

24. Land, air or sea vehicle according to claim 23, **characterized in that** the collision matting (63) is unitarily formed with that portion of the textile head support (60) disposed between the vertical straps (18).

## Revendications

1. Véhicule de transport terrestre, aérien ou maritime, comportant un compartiment de transport destiné à recevoir des marchandises et/ou des sièges, fixés contre le véhicule et destinés au transport de personnes, sachant qu'il est prévu dans une rangée médiane du compartiment de transport au moins une rangée de sièges agencés les uns à côté des autres suivant l'axe longitudinal du véhicule et orientés perpendiculairement à la direction de déplacement du véhicule, **caractérisé en ce que** des réseaux (40) formés par des sangles textiles sont tendus entre les parois latérales (11), face à face et orientées dans la direction de déplacement du véhicule, et le plafond et le sol (12, 13) du compartiment de transport (10) dans la trame des sièges à mettre en place et chaque siège (25) est fixé séparément contre un réseau (40) associé, fixé sous précontrainte contre des éléments portants du véhicule, chaque réseau (40) étant formé par deux sangles transversales (15), écartées l'une de l'autre selon la largeur du siège et tendues entre les parois latérales (11) à proximité du plafond, et par deux sangles verticales (18) écartées l'une de l'autre selon la largeur du siège et tendues entre le plafond (12) et le sol (13), et les sangles transversales (15) et les sangles verticales (18) étant assemblées les unes aux autres au niveau de leurs points d'intersection (19).

2. Véhicule de transport terrestre, aérien ou maritime selon la revendication 1, **caractérisé en ce que** dans un agencement en double rangée avec deux sièges (25) dos à dos, le réseau (40) destiné à recevoir les deux sièges (25) comporte un double agencement de sangles verticales (18), de telle sorte qu'à chacun des deux sièges (25) sont associées respectivement ses propres sangles verticales (18) assemblées aux sangles transversales (15) communes.

3. Véhicule de transport terrestre, aérien ou maritime selon la revendication 1 ou 2, **caractérisé en ce qu'**un tendeur de sangle (17) est monté dans chacune des sangles transversales (15) et des sangles verticales (18).

4. Véhicule de transport terrestre, aérien ou maritime selon la revendication 1 ou 2, **caractérisé en ce qu'**un tendeur de sangle (17) central est monté dans le réseau (40) formé par les sangles transversales (15) et les sangles verticales (18).

5. Véhicule de transport terrestre, aérien ou maritime selon l'une quelconque des revendications 1 à 4, **caractérisé en ce que** les sangles verticales (18) et les sangles transversales (15) sont cousues les unes aux autres au niveau de leurs points d'intersection (19).

6. Véhicule de transport terrestre, aérien ou maritime selon l'une quelconque des revendications 1 à 4, **caractérisé en ce que** pour l'assemblage des sangles verticales (18) et des sangles transversales (15) au niveau de leurs points d'intersection (19), des anneaux (20) sont insérés dans l'une des sangles (15, 18), auxquels sont attachées les autres sangles (15, 18) correspondantes par l'intermédiaire de moyens d'assemblage amovibles.

7. Véhicule de transport terrestre, aérien ou maritime comportant un compartiment de transport destiné à recevoir des marchandises et/ou des sièges, fixés contre le véhicule et destinés au transport de personnes selon l'une quelconque des revendications 1 à 6, **caractérisé en ce qu'**une structure de support (21), formée par des sangles textiles (22, 23) et fixée aux sangles verticales (18), est montée entre deux sangles verticales (18) tendues en étant écartées selon la largeur du siège.

8. Véhicule de transport terrestre, aérien ou maritime selon la revendication 7, **caractérisé en ce que** la structure de support (21) est formée par deux sangles de support disposées en croix (22), tendues dans le plan des sangles verticales (18), et par deux sangles de support droites (23) disposées entre les sangles verticales (18), les sangles de support (22, 23) étant attachées chacune avec leurs extrémités libres contre les sangles verticales (18).

9. Véhicule de transport terrestre, aérien ou maritime selon la revendication 7 ou 8, **caractérisé en ce qu'**un tendeur de sangle (24) est monté dans la structure de support (21) formée par les sangles de support (22, 23).

10. Véhicule de transport terrestre, aérien ou maritime selon l'une quelconque des revendications 1 à 9, **caractérisé en ce que**, en présence de deux réseaux (40) juxtaposés suivant l'axe longitudinal du véhicule, les réseaux (40) adjacents sont assemblés chacun à une sangle transversale (15) commune et/ou une sangle verticale (18) commune.

11. Véhicule de transport terrestre, aérien ou maritime selon l'une quelconque des revendications 1 à 10, comportant un siège à fixer dans le véhicule au moyen de sangles de serrage disposées au-dessus et au-dessous du siège, **caractérisé en ce que** les sangles de serrage (29) appartenant au siège (25) peuvent être ancrées en partie sur le réseau (40) et en partie sur des points d'ancrage solidaires du véhicule.

12. Véhicule de transport terrestre, aérien ou maritime selon l'une quelconque des revendications 1 à 11, comportant un siège, destiné à être fixé contre les sangles verticales (18) du réseau (40) et muni d'un harnais de sécurité pour bloquer un passager assis sur le siège, **caractérisé en ce que**, pour maintenir la surface d'assise (50), réalisée sous forme de pièce résistante à la pression, il est prévu de fixer contre les sangles verticales (18) des sangles de suspension, qui enserrent chacune latéralement la surface d'assise (50) et qui, lorsque la surface d'assise (50) est dans la position assise, s'étendent depuis une zone de fixation inférieure (64) avec les sangles verticales (18) avec une partie (52) le long des bords latéraux de la surface d'assise (50) jusqu'aux angles avant (54) de celle-ci et à partir de là reviennent vers les sangles verticales (18) selon un tracé oblique par rapport à l'axe vertical et sont fixées contre celles-ci au niveau d'une zone de fixation supérieure (65), et **en ce que** la surface d'assise (50), dans la structure de sangles la maintenant et formée par les sangles verticales (18) et les sangles de suspension (51) latérales, peut être rabattue entre sa position assise et une position de stockage moyennant le relevage de l'extrémité arrière (55) de la surface d'assise (50), associée aux sangles verticales (18).

13. Véhicule de transport terrestre, aérien ou maritime selon la revendication 12, **caractérisé en ce que** la surface d'assise avec son extrémité arrière s'étend entre les sangles de support verticales et est guidée entre celles-ci lors de son mouvement de rabattement.

14. Véhicule de transport terrestre, aérien ou maritime selon la revendication 12 ou 13, **caractérisé en ce qu'**un câble d'actionnement (56) est attaché à l'extrémité arrière (55) de la surface d'assise (50) et est guidé au-dessus d'un renvoi (57), situé dans la zone du plafond (12) du véhicule, et comporte une boucle de préhension (59) dans la zone du plafond du véhicule.

15. Véhicule de transport terrestre, aérien ou maritime selon l'une quelconque des revendications 12 à 14, **caractérisé en ce que** la surface d'assise (50) est réalisée dans une plaque résistante.

16. Véhicule de transport terrestre, aérien ou maritime selon l'une quelconque des revendications 12 à 14, **caractérisé en ce que** la surface d'assise (50) est formée par un cadre tubulaire avec une surface d'assise textile, supportée par ce dernier.

17. Véhicule de transport terrestre, aérien ou maritime selon l'une quelconque des revendications 12 à 16, **caractérisé en ce que** les sangles de suspension (51) latérales sont fixées contre la surface d'assise (50) au niveau de ses angles avant (54).

18. Véhicule de transport terrestre, aérien ou maritime selon l'une quelconque des revendications 12 à 17, **caractérisé en ce que** les sangles de suspension (51) latérales sont réalisées sous forme de sangles d'un seul tenant.

19. Véhicule de transport terrestre, aérien ou maritime selon l'une quelconque des revendications 12 à 17, **caractérisé en ce que** les sangles de suspension (51) latérales sont formées par deux tronçons de sangle séparés, assemblés chacun avec les sangles verticales (18) et la surface d'assise (50).

20. Véhicule de transport terrestre, aérien ou maritime selon l'une quelconque des revendications 12 à 19, **caractérisé en ce que**, pour former une protection contre les chocs à la tête, un appui-tête (60) textile est tendu entre les sangles verticales (18) dans le plan du dossier (66) et se prolonge par des faces d'appui (61) latérales, qui sont situées au-dessus des sangles de suspension (51) latérales et qui sont attachées au niveau de leur extrémité libre avant contre une sangle de serrage (62) qui s'étend en oblique par rapport à l'axe vertical du véhicule depuis un point de fixation supérieur (67) dans la zone du plafond du véhicule jusqu'au point de fixation inférieur de la sangle verticale (18) sur le sol (13) du véhicule.

21. Véhicule de transport terrestre, aérien ou maritime selon la revendication 20, **caractérisé en ce que** l'appui-tête (60) est réalisé dans un matériau textile partiellement transparent.

22. Véhicule de transport terrestre, aérien ou maritime selon la revendication 20 ou 21, **caractérisé en ce que** la sangle de serrage (62) est munie d'un tendeur amovible, apte à être actionné.

23. Véhicule de transport terrestre, aérien ou maritime selon l'une quelconque des revendications 12 à 22, **caractérisé en ce qu'**une surface anti-choc (63) textile supplémentaire est fixée contre les sangles verticales (18) entre la zone de l'appui-tête (60), tendue entre les sangles verticales (18), et le dossier (66).

24. Véhicule de transport terrestre, aérien ou maritime selon la revendication 23, **caractérisé en ce que** la surface anti-choc (63) est réalisée d'un seul tenant avec la partie de l'appui-tête (60) située entre les sangles verticales (18).
